# EUROPÄISCHE PATENTSCHRIFT

(11) **EP 0 638 514 B1**
(45) Veröffentlichungstag und Bekanntmachung des Hinweises auf die Patenterteilung: **02.04.1997**
(21) Anmeldenummer: 94110499.4
(22) Anmeldetag: 06.07.1994
(51) Int. Cl.: C01B 3/38, B01J 8/06

(54) **Röhrenofen für die Erzeugung kohlenmonoxidhaltiger Gasgemische**
Tubular furnace for the generation of gas mixtures containing carbon monoxide
Four tubulaire pour génération de mélanges contenant le monoxyde de carbone

(30) Priorität: 13.08.1993 DE 4327176
(43) Veröffentlichungstag der Anmeldung: 15.02.1995
(73) Patentinhaber: METALLGESELLSCHAFT AG, 60323 Frankfurt am Main (DE)
(72) Erfinder: Hohmann, Friedrich, D-63225 Langen (DE); Röll, Werner, D-63579 Freigericht (DE); Mörtel, Hans Günter, D-60431 Frankfurt am Main (DE)

(56) Entgegenhaltungen:
- EP-A- 0 258 907
- CHEMICAL ENGINEERING, Bd.93, Nr.1, 6. Januar 1986, NEW YORK US Seiten 83 - 87 C.M.SCHILLMOLLER 'Solving high-temperature problems in oil refineries and petrochemical plants'
- HYDROCARBON PROCESSING, Bd.51, Nr.8, August 1972, HOUSTON US Seiten 73 - 75 R.C.SCHUELER 'Metal Dusting'
- PROCEEDINGS OF THE 4TH INTERNATIONAL CONGRESS ON METALLIC CORROSION, 1969, HOUSTON, TEXAS, USA Seiten 258 - 263 R.F.HOCHMANN 'Basic studies of metal deterioration ('

## Beschreibung

Die Erfindung betrifft einen Röhrenofen zum katalytischen Spalten von Kohlenwasserstoffen zur Erzeugung von vor allem Wasserstoff, Kohlenmonoxid und Kohlendioxid enthaltendem rohem Synthesegas, wobei der Ofen zahlreiche, in einem Feuerraum befindliche, Katalysator enthaltende Röhren aufweist.

Röhrenöfen dieser Art sind bekannt, sie dienen z.B. zum katalytischen Spalten von Erdgas, wobei man das erzeugte Synthesegas z.B. für die Methanolsynthese verwendet. In den Röhren herrschen üblicherweise Drücke im Bereich von 1 bis 20 bar und das rohe Synthesegas weist am Mündungsende der Röhren Temperaturen zwischen 700 und 1000°C auf. Dabei hat sich gezeigt, daß das Mündungsende der Röhren dem Korrosionsangriff durch Karbidbildung (Metal Dusting) ausgesetzt ist, was zur Zerstörung des metallischen Werkstoffs führt.

Der Erfindung liegt die Aufgabe zugrunde, die durch die Metal-Dusting-Korrosion gefährdeten Mündungsenden der Röhren und deren Umgebung wirksam zu schützen. Erfindungsgemäß gelingt dies beim eingangs genannten Röhrenofen dadurch, daß mindestens einige der Röhren im Außenbereich ihres vom rohen Synthesegas durchströmten, außerhalb des Feuerraums liegenden Mündungsendes eine Einrichtung zum Zuführen eines weitgehend CO-freien, gas- oder dampfförmigen Schutzmediums aufweisen. Dieses Schutzmedium verhindert den Korrosionsangriff im besonders gefährdeten Bereich um die Mündungsenden der Röhren durch das CO-haltige Synthesegas. Der Temperaturbereich, in welchem die Metal-Dusting-Korrosion erfolgt, liegt, abhängig vom CO-Gehalt, etwa zwischen 500 und 850°C.

Vorzugsweise weist die Außenseite des Mündungsendes mindestens einiger Röhren eine Kammer zum Einleiten von Schutzmedium auf. Diese Kammer schließt sich üblicherweise an eine das Mündungsende der Röhren umgebende feuerfeste Auskleidung an.

Einzelheiten der erfindungsgemäßen Ausgestaltung des Röhrenofens werden mit Hilfe der Zeichnung erläutert. Es zeigt:
- Fig. 1: einen horizontalen Schnitt durch einen Röhrenofen in schematischer Darstellung und
- Fig. 2: die vergrößerte Darstellung des Mündungsendes einer Röhre im Längsschnitt.

In einem feuerfesten Gehäuse (1) befindet sich ein Feuerraum (2), in welchem zahlreiche, senkrecht angeordnete Röhren (3) von außen beheizt werden. Zur Beheizung dienen mehrere Brenner (4), die z.B. mit Erdgas gespeist werden. In die Röhren (3) tritt durch Speiseleitungen (5) ein Kohlenwasserstoffe und Wasserdampf enthaltendes Gemisch ein, das in den Röhren an dem dort angeordneten Katalysator (z.B. Nickelkatalysator) zu einem vor allem Wasserstoff, Kohlenmonoxid und Kohlendioxid enthaltenden rohen Synthesegas umgesetzt wird. Mit Temperaturen von 700 bis 1000°C und vorzugsweise mindestens 800°C strömt das Synthesegas in den Röhren nach unten und tritt durch das Mündungsende (3a) in eine Sammelleitung (6) ein.

Es hat sich gezeigt, daß vor allem die Außenseiten der Mündungsenden (3a) und deren Umgebung dem Angriff durch Metal-Dusting-Korrosion ausgesetzt sind, wobei das Metall durch die Bildung von Karbiden zerstört wird. Diese Karbidbildung, die durch den Zerfall von Kohlenmonoxid gemäß der Reaktion 2 CO --> CO₂ + C hervorgerufen wird, ist besonders intensiv im Temperaturbereich von 500 bis 850°C. Temperaturen in diesem Bereich treten üblicherweise an der Außenseite der Mündungsenden (3a) und deren Umgebung auf.

Die Sammelleitung (6) ist an der Innenwand mit einer feuerfesten Auskleidung (6a) versehen, welche auch die Mündungsenden (3a) der Röhren (3) umgibt. Die feuerfeste Auskleidung weist eine gewisse Porosität auf, so daß man damit rechnen muß, daß Synthesegas hindurchdiffundiert und mit relativ niedrigen Temperaturen an die Außenseite der Mündungsenden (3a) gelangt, was zur erwähnten Korrosion führt.

Zum Schutz der Mündungsenden (3a) und ihrer nächsten Umgebung gegen die Korrosion durch Karbidbildung weist jedes Mündungsende eine Zuleitung (7) auf, die ein gas- oder dampfförmiges Schutzmedium aus einer Hauptleitung (8) heranführt. Bei dem Schutzmedium kann es sich z.B. um Wasserstoff, Wasserdampf, Stickstoff oder CO₂ handeln.

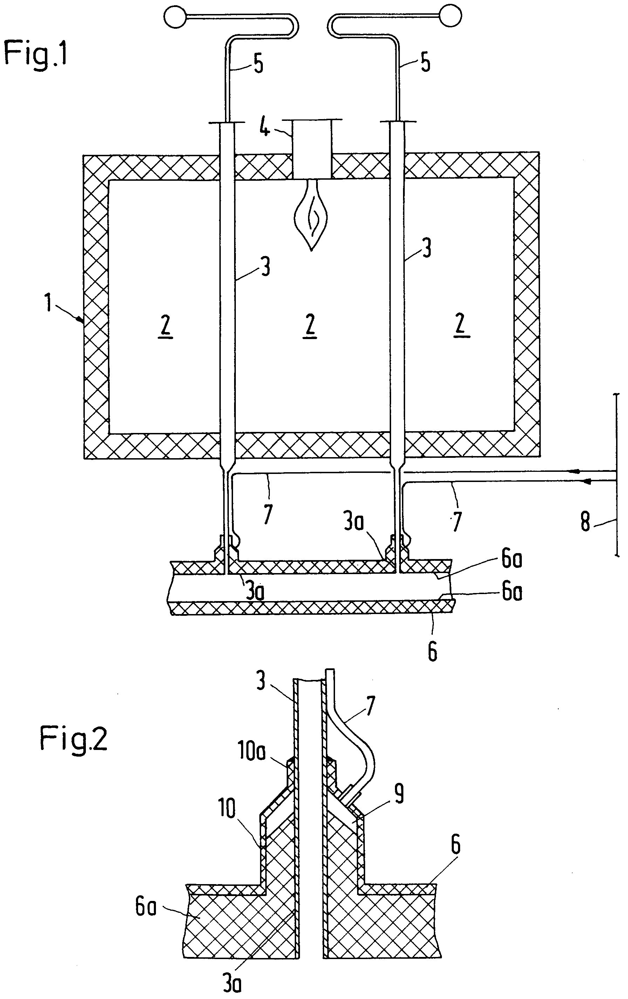

In Fig. 2 ist zu sehen, wie das Schutzmedium durch die Leitung (7) zunächst in eine Kammer (9) geleitet wird, die sich innerhalb einer glockenförmigen Erweiterung (10) der Sammelleitung (6) befindet. Die Erweiterung (10) ist am oberen Ende (10a) mit dem Rohr (3) verschweißt. Das Schutzmedium verhindert die Metal-Dusting-Korrosion sowohl an der Außenseite des Mündungsendes (3a) als auch an der Innenseite der Erweiterung (10).

Die feuerfeste Auskleidung (6a) der Sammelleitung (6) umgibt das Mündungsende (3a) des Rohrs (3). Die Auskleidung (6a), die z.B. aus Stampfmasse gebildet wird, ist etwas porös, so daß das Schutzmedium aus der Kammer (9) hindurchdiffundieren kann und schließlich mit dem Synthesegas durch die Sammelleitung (6) abgeführt wird.

Wie aus Fig. 1 und 2 zu sehen ist, wird die von der Hauptleitung (8) kommende, Schutzmedium führende Leitung (7) für eine gewisse Strecke unmittelbar an der Außenseite der jeweiligen Röhre (3) entlang nach unten geführt. Hierbei sorgt das heiße Gas im Inneren der Röhre (3) durch indirekten Wärmeaustausch für eine Aufheizung des Schutzmediums in der Leitung (7), so daß es mit erhöhter Temperatur in die Kammer (9) eintritt. Durch diese Aufheizung des Schutzmediums werden Wärmespannungen im Bereich des Mündungsendes (3a) vermieden.

## Patentansprüche

1. Röhrenofen zum katalytischen Spalten von Kohlenwasserstoffen zur Erzeugung von vor allem Wasserstoff, Kohlenmonoxid und Kohlendioxid enthaltendem rohem Synthesegas, wobei der Ofen zahlreiche, in einem Feuerraum befindliche, Katalysator enthaltende Röhren aufweist, dadurch gekennzeichnet, daß mindestens einige der Röhren im Außenbereich ihres vom rohen Synthesegas durchströmten, außerhalb des Feuerraums liegenden Mündungsendes eine Einrichtung zum Zuführen eines weitgehend CO-freien, gas- oder dampfförmigen Schutzmediums aufweisen.

2. Röhrenofen nach Anspruch 1, dadurch gekennzeichnet, daß die Außenseite des Mündungsendes mindestens einiger Röhren eine Kammer zum Einleiten von Schutzmedium aufweist.

3. Röhrenofen nach Anspruch 1 oder 2, dadurch gekennzeichnet, daß das Mündungsende mindestens einiger Röhren eine feuerfeste Auskleidung aufweist.

4. Röhrenofen nach einem der Ansprüche 1 bis 3, dadurch gekennzeichnet, daß das Schutzmedium durch eine Leitung herangeführt wird, die über eine gewisse Strecke unmittelbar entlang der Außenseite des zugehörigen, Synthesegas führenden Rohres verläuft.

## Claims

1. A tubular furnace for the catalytic cracking of hydrocarbons for producing crude synthesis gas containing above all hydrogen, carbon monoxide and carbon dioxide, in which the furnace has a plurality of catalyst-containing tubes which are located in a combustion chamber, characterised in that at least some of the tubes in the outer region of their mouth end which is located outside the combustion chamber and through which the crude synthesis gas flows have a means for supplying a largely CO-free, gaseous or vaporous protective medium.

2. A tubular furnace according to Claim 1, characterised in that the outside of the mouth end of at least some tubes has a chamber for introducing protective medium.

3. A tubular furnace according to Claim 1 or 2, characterised in that the mouth end of at least some tubes has a refractory lining.

4. A tubular furnace according to one of Claims 1 to 3, characterised in that the protective medium is brought in through a line which extends over a certain distance immediately along the outside of the associated tube carrying synthesis gas.

## Revendications

1. Four tubulaire pour le craquage catalytique d'hydrocarbures, dans le but de produire un gaz de synthèse brut, contenant surtout de l'hydrogène, du monoxyde de carbone et du dioxyde de carbone, le four comportant plusieurs tubes se trouvant dans une chambre de combustion et contenant du catalyseur, caractérisé en ce qu'au moins quelques-uns des tubes comportent, dans la zone extérieure de leur embouchure, dans laquelle passe du gaz de synthèse brut et qui se trouve à l'extérieur de la chambre de combustion, un dispositif destiné à amener un fluide protecteur essentiellement exempt de CO, sous forme de gaz ou de vapeur.

2. Four tubulaire selon la revendication 1, caractérisé en ce que la face extérieure de l'embouchure d'au moins quelques tubes comporte un compartiment destiné à introduire le fluide protecteur.

3. Four tubulaire selon la revendication 1 ou 2, caractérisé en ce que l'embouchure d'au moins quelques tubes comporte un revêtement réfractaire.

4. Four tubulaire selon l'une des revendications 1 à 3, caractérisé en ce que le fluide protecteur est amené par une conduite qui, sur une certaine distance, court directement le long de la face extérieure du tube correspondant dans lequel passe le gaz de synthèse.
